# FASCICULE DE BREVET EUROPEEN

(11) **EP 2 398 674 B1**
(45) Date de publication et mention de la délivrance du brevet: **15.05.2013**
(21) Numéro de dépôt: 10709890.7
(22) Date de dépôt: 19.02.2010
(51) Int. Cl.: B32B 5/22, B32B 5/24, B32B 5/26, B32B 5/32, B32B 7/02, B60R 13/08, G10K 11/168

(54) **ENSEMBLE D'INSONORISATION POUR VÉHICULE AUTOMOBILE ET ÉLÉMENT DE PAROI ASSOCIÉ**
SCHALLDÄMMENDE ANORDNUNG FÜR EIN KRAFTFAHRZEUG UND ZUGEHÖRIGES WANDELEMENT
SOUNDPROOFING ASSEMBLY FOR AN AUTOMOBILE, AND ASSOCIATED WALL ELEMENT

(30) Priorité: 20.02.2009 FR 0951114
(43) Date de publication de la demande: 28.12.2011
(73) Titulaire: Faurecia Automotive Industrie, 92000 Nanterre (FR)
(72) Inventeur: DUVAL, Arnaud, F-08000 Charleville-Mezieres (FR); BISCHOFF, Lars, 38114 Braunschweig (DE); RONDEAU, Jean-François, F-08110 Carignan (FR)
(74) Mandataire: Domenego, Bertrand
(86) Numéro de dépôt international: PCT/FR2010/050289
(87) Numéro de publication internationale: WO 2010/094897

(56) Documents cités:
- EP-A- 1 428 656
- WO-A-2007/006950
- FR-A- 2 901 209
- US-A- 6 145 617

## Description

La présente invention concerne un ensemble d'insonorisation pour véhicule automobile, selon le préambule de la revendication 1.

Un tel ensemble est destiné à résoudre les problèmes acoustiques qui se posent dans un espace sensiblement clos, tel que l'habitacle d'un véhicule automobile, au voisinage de sources de bruit telles qu'un moteur, le contact de pneumatiques avec une route, etc.

En général, dans le domaine des basses fréquences, les ondes acoustiques engendrées par les sources de bruit précitées subissent un « amortissement » par des matériaux sous forme de feuilles simples ou doubles (sandwich) ou par un effet de porosité et d'élasticité d'un système masse-ressort, notamment à mousse viscoélastique.

Au sens de la présente invention, un ensemble d'insonorisation assure une « isolation » lorsqu'il empêche l'entrée d'ondes acoustiques à moyennes et hautes fréquences dans l'espace insonorisé, essentiellement par réflexion des ondes vers les sources de bruit ou l'extérieur de l'espace insonorisé.

Un ensemble d'insonorisation fonctionne par « absorption acoustique » (dans le domaine des moyennes et hautes fréquences) lorsque l'énergie des ondes acoustiques se dissipe dans un matériau absorbant.

On connaît de WO 2007/006950 un ensemble d'insonorisation du type précité, qui comprend une couche ressort de base disposée sur une surface intérieure du véhicule automobile, et une couche de masse lourde étanche à l'air, pour assurer, en combinaison avec la couche ressort de base, une bonne isolation acoustique, par un effet de type « masse-ressort ».

L'ensemble d'insonorisation décrit dans WO 2007/006950 comprend en outre, au-dessus de la couche de masse lourde, au moins une couche supérieure de mousse absorbante qui assure une bonne absorption acoustique.

Un tel ensemble permet donc de combiner de bonnes propriétés d'isolation acoustique et une absorption acoustique significative sur une large gamme de fréquences, tout en offrant une réduction de poids substantielle par rapport à un système classique du type « masse-ressort » simple.

Les ensembles d'insonorisation décrits dans WO 2007/006950 peuvent être réalisés industriellement de manière satisfaisante, en conservant de bonnes propriétés acoustiques, avec une couche de masse lourde présentant une masse surfacique minimale d'environ 2 kg/m².

Toutefois, compte tenu des contraintes actuelles de réduction de la masse des véhicules automobiles, les constructeurs automobiles imposent d'alléger encore les ensembles d'insonorisation

US 6 145 617 décrit un ensemble selon le préambule de la revendication 1.

Un but de l'invention est donc d'obtenir un ensemble d'insonorisation encore plus léger, qui reste facile à fabriquer tout en présentant d'excellentes propriétés combinées d'isolation et d'absorption acoustique.

A cet effet, l'invention a pour objet un ensemble selon la revendication 1.

L'ensemble selon l'invention peut comprendre l'une ou plusieurs des caractéristiques des revendications 2 à 14.

L'invention a également pour objet un élément de paroi de véhicule automobile, selon la revendication 15.

L'invention a également pour objet un procédé de fabrication d'un ensemble tel que défini plus haut, caractérisé en ce qu'il comprend les étapes suivantes :
- broyage d'une pièce d'équipement de véhicule automobile pour former des morceaux divisés de matière solide recyclée ;
- incorporation des morceaux de matière solide recyclée dans un feutre ou dans une mousse poreuse pour former la couche de rigidification; et
- assemblage de la couche de rigidification avec l'une au moins de la couche supérieure poreuse élastique et de la couche ressort de base.

L'invention sera mieux comprise à la lecture de la description qui va suivre, donnée uniquement à titre d'exemple, et faite en se référant aux dessins annexés, sur lesquels :
- la Figure 1 est une vue en coupe transversale d'un premier ensemble d'insonorisation quadri-perméable selon l'invention, appliqué sur une surface intérieure d'un véhicule automobile formée par le tablier ;
- la Figure 2 est une vue analogue à la Figure 1 d'un deuxième ensemble d'insonorisation selon l'invention appliqué sur le tablier du véhicule ;
- la Figure 3 est une vue analogue à la Figure 1 d'un troisième ensemble d'insonorisation selon l'invention appliqué sur le tablier du véhicule ;
- la Figure 4 est une vue analogue à la Figure 1 d'un quatrième ensemble d'insonorisation selon l'invention appliqué sur le tablier du véhicule ;
- la Figure 5 est une vue analogue à la Figure 1 d'un cinquième ensemble d'insonorisation selon l'invention formant un tapis du véhicule ;
- la Figure 6 est une vue analogue à la Figure 1 d'un sixième ensemble d'insonorisation selon l'invention formant un tapis du véhicule ;
- la Figure 7 est une vue analogue à la Figure 1 d'un septième ensemble d'insonorisation selon l'invention formant un tapis du véhicule ;
- la Figure 8 est une vue analogue à la Figure 1 d'un huitième ensemble d'insonorisation selon l'invention formant un tapis du véhicule ;
- la Figure 9 est une vue analogue à la Figure 1 d'un neuvième ensemble d'insonorisation selon l'invention formant un tapis du véhicule ;
- la Figure 10 est une vue analogue à la Figure 1 d'un dixième ensemble d'insonorisation selon l'invention, disposé en regard d'un plancher du véhicule automobile ;
- la Figure 11 est une vue analogue à la Figure 10 d'un onzième ensemble d'insonorisation selon l'invention ;
- la Figure 12 est une vue en coupe suivant un plan vertical d'un douzième ensemble d'insonorisation selon l'invention, disposé au-dessus d'un passage de roue ;
- la Figure 13 est une vue analogue à la Figure 12 d'un treizième ensemble d'insonorisation selon l'invention ;
- la Figure 14 est un graphe illustrant les courbes du coefficient d'absorption en champs diffus en fonction de la fréquence pour deux ensembles d'absorption selon l'invention et pour un ensemble d'absorption de l'état de la technique.

Dans tout ce qui suit, les orientations sont généralement les orientations habituelles d'un véhicule automobile. Toutefois, les termes « au dessus », « sur », « en dessous », « sous », « supérieur » et « inférieur » s'entendent de manière relative, par rapport à la surface de référence du véhicule automobile, en regard de laquelle est disposé l'ensemble d'insonorisation. Le terme « inférieur » s'entend ainsi comme étant situé le plus près de la surface et le terme « supérieur » comme étant situé le plus éloigné de cette surface.

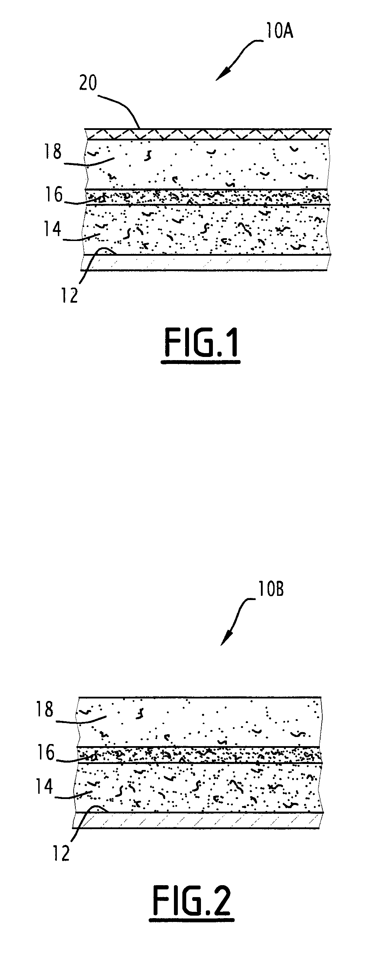

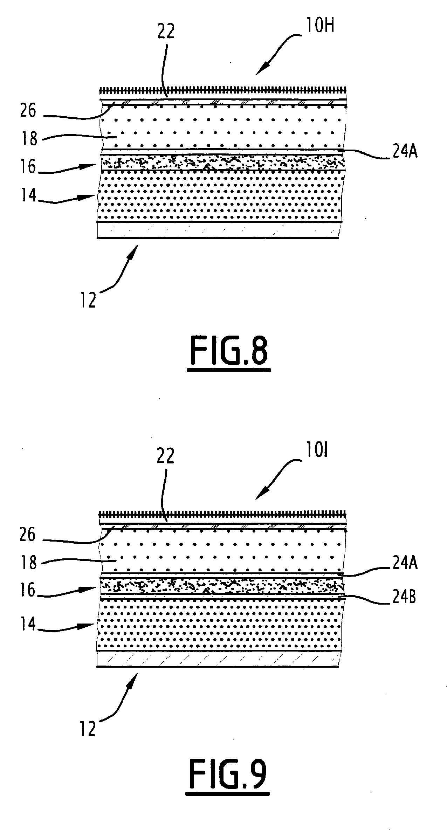

Des exemples d'ensembles d'insonorisation 10A à 10M selon l'invention, destinés à être placés en regard d'une surface 12 d'un véhicule automobile, sont représentés sur les Figures 1 à 13.

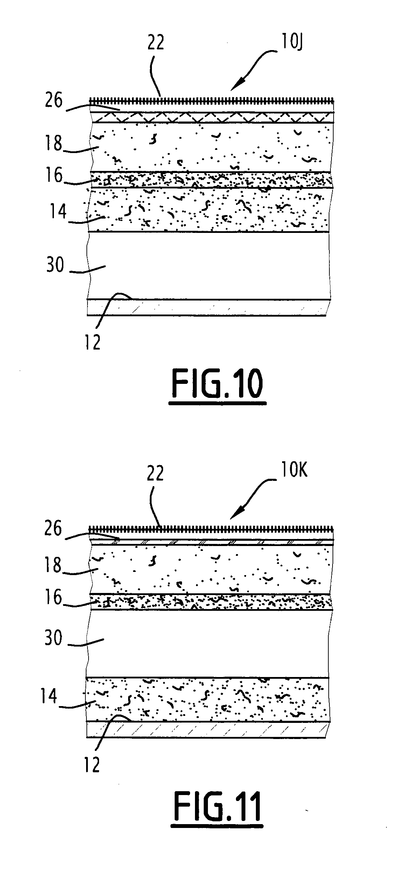

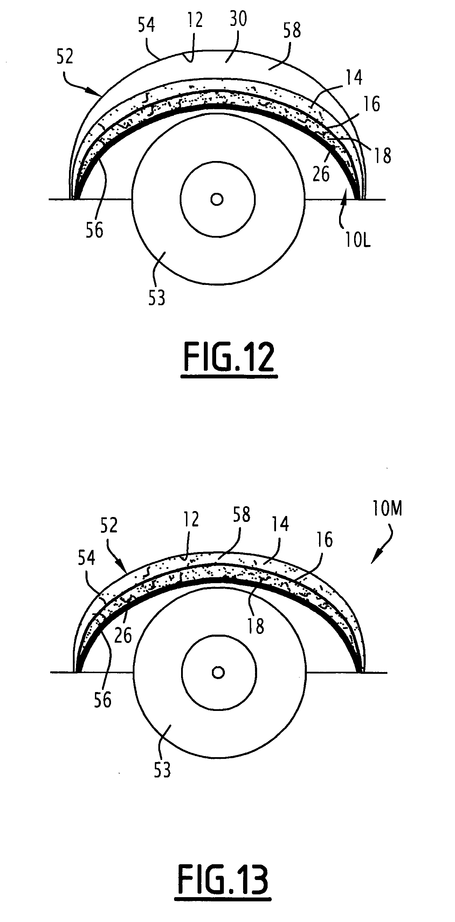

La surface 12 est par exempte une surface métallique en tôle du véhicule automobile qui définit notamment un plancher du véhicule, comme illustré par les Figures 10 et 11, ce plancher étant par exemple un plancher de coffre. En variante, la surface 12 définit un tablier séparant l'habitacle du compartiment moteur (Figures 1 à 9), un plafond du véhicule automobile, une porte, ou un passage de roue avant ou arrière, comme illustré par les Figures 12 et 13.

On décrira tout d'abord la structure générale et les propriétés des différentes couches formant un ensemble d'insonorisation selon l'invention et ensuite, des exemples de disposition de ces couches, tels que représentés sur les Figures 1 à 13.

Selon l'invention, l'ensemble d'insonorisation comprend une couche ressort de base 14, destinée à être placée en regard de la surface 12, une couche de rigidification 16 disposée au-dessus de la couche ressort de base 14 et réalisée à base d'un matériau poreux dense, et une couche supérieure poreuse élastique 18 disposée au dessus de la couche de rigidification 16.

Optionnellement, l'ensemble d'insonorisation comprend en outre une couche résistive supérieure 20, disposée au-dessus de la couche supérieure poreuse élastique 18, et optionnellement encore, une couche décorative 22 ou une couche de protection 56 placée au-dessus de la couche 18, en remplacement de la couche 20 ou au-dessus de celle-ci.

La couche ressort de base 14, en combinaison avec la couche de rigidification 16, est destinée à assurer des bonnes propriétés d'isolation acoustique.

Elle est réalisée par exemple à base d'un feutre, ou à base d'une mousse poreuse et élastique.

Par « feutre », on entend au sens de la présente invention, un mélange de fibres de base et de liant. Les fibres peuvent être des fibres nobles et/ou recyclées, naturelles ou synthétiques, d'une seule ou de plusieurs natures. Des exemples de fibres naturelles pouvant être utilisées sont le lin, le coton, le chanvre, le bambou etc. Des exemples de fibres synthétiques pouvant être utilisées sont les fibres de verre, le kevlar, le polyamide, l'acrylique, le polyester, le polypropylène, ces exemples n'étant pas limitatifs.

Le liant est par exemple une résine ou des fibres liantes qui présentent un point de fusion inférieur à celui des fibres de base à lier. Des exemples de résines sont les résines époxy, ou les résines phénoliques. Des exemples de fibres liantes sont le polypropylène, le polyéthylène, le polyamide, le polyester, ou les polyesters bicomposants, ces exemples n'étant pas limitatifs.

Dans une variante, le feutre de la couche ressort de base contient de la matière recyclée provenant de déchets d'origine interne ou externe, par exemple de chutes de pièces d'équipements automobiles, de rebuts de fabrication, ou de pièces de fin de vie d'un véhicule. Ces déchets sont par exemple broyés et incorporés dans le feutre sous forme de morceaux de matière divisée constitués par des agglomérats, des flocons ou des particules. Les composants des déchets peuvent être séparés avant ou pendant le broyage.

Dans la variante de couche ressort de base en mousse, la mousse est à cellules ouvertes. Elle est par exemple réalisée en polyuréthanne. La mousse est injectée ou refendue.

En variante, la mousse injectée ou refendue contient également de la matière recyclée, telle que définie ci-dessus, ou des charges minérales ou encore du bio-polyol.

La couche ressort de base 14 est poreuse et présente une porosité adaptée pour présenter une résistivité au passage de l'air avantageusement comprise entre 10 000 N.m⁻⁴.s et 90 000 N.m⁻⁴.s, de préférence 30 000 N.m⁻⁴.s.

La résistance et la résistivité au passage de l'air sont mesurées par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

Dans le cas du feutre, la couche 14 présente une masse surfacique comprise entre 200 g/m² et 2 000 g/m², avantageusement comprise entre 750 g/m² et 1 400 g/m². Dans le cas de la mousse, la masse volumique de la couche 14 est comprise entre 30 kg/m³ et 70 kg/m³ et notamment environ 50 kg/m³.

L'épaisseur de la couche ressort de base 14, prise perpendiculairement à la surface 12, est avantageusement comprise entre 5 mm et 30 mm, et par exemple voisine de 15 mm.

Pour présenter des propriétés de ressort, la couche ressort de base 14 présente avantageusement un module élastique compris entre 100 Pa et 100 000 Pa, notamment environ 8000 Pa.

Selon l'invention, la couche de rigidification 16 est réalisée à base d'un matériau poreux relativement dense présentant une résistance au passage de l'air strictement supérieure à 2500 N.m⁻³.s.

Cette couche 16 est réalisée par exemple à base d'un feutre comprimé, le feutre étant tel que défini plus haut, ou d'une nappe de matière recyclée comprimée.

Dans une variante, la couche de rigidification 16 est formée à base d'un mélange de fibres de polymère, avantageusement des fibres de polypropylène, avec des fibres de verre ou des fibres naturelles.

Selon l'invention, une « nappe de matière recyclée » est obtenue par broyage, et/ou densification et/ou granulation, puis saupoudrage de déchets sur un support. La matière recyclée provient de déchets d'origine interne ou externe constitués par exemple par des chutes de pièces, des rebuts, des pièces de fin de vie d'un véhicule automobile. Ces déchets sont par exemple broyés pour former des morceaux de matière divisée constitués par des agglomérats, des flocons, ou des particules de déchets. Ces déchets peuvent également être broyés et densifiés ou broyés et transformés en granulés pour former des morceaux de matière divisée constitués par des agglomérats de déchets.

Les composants des déchets peuvent être séparés avant ou pendant le broyage. Les morceaux ou agglomérats ou granulés de déchets sont ensuite déposés par exemple au moyen d'une saupoudreuse sur une couche de non-tissé, sur une couche de feutre ou sur un film. Une seconde couche de non-tissé, de feutre ou de film est avantageusement déposée sur la face supérieure de la matière recyclée.

La nappe de matière recyclée est ensuite densifiée, et comprimée par exemple par aiguilletage, ou par chauffage et calandrage, ou encore par l'utilisation d'une presse double bande avec ou sans préchauffe.

La couche 16 présente ainsi une résistance au passage de l'air qui est strictement supérieure à 2500 N.m⁻³.s, et est inférieure à 6000 N.m⁻³.s. Avantageusement, cette résistance au passage de l'air est comprise entre 3000 N.m⁻³.s et 5000 N.m⁻³.s.

Elle présente une masse surfacique comprise avantageusement entre 250 g/m² et 2000 g/m², notamment supérieure à 1000 g/m², par exemple comprise entre 1000 g/m² et 1800 g/m². La couche 16 présente une épaisseur strictement inférieure à celle de la couche ressort de base 14 et à celle de la couche supérieure 18, par exemple comprise entre 2 mm et 7 mm et avantageusement sensiblement égale à 5 mm.

Elle présente un module d'Young supérieur à 100 000 Pa et avantageusement compris entre 100 000 Pa et 10⁸ Pa, avantageusement sensiblement égal à 10⁷ Pa.

Malgré sa perméabilité importante par rapport à une masse lourde étanche, la couche 16 combinée avec les couches 14 et 18 assure, de manière surprenante une bonne isolation acoustique, supérieure à celle des ensembles bi-perméables connus de l'état de la technique.

La couche supérieure poreuse élastique 18 est destinée à présenter de bonnes propriétés d'absorption. Elle présente une résistivité au passage de l'air comprise entre 10 000 N.m⁻⁴.s et 140 000 N.m⁻⁴.s.

L'épaisseur de la couche supérieure poreuse 18 est par exemple comprise entre 5 mm et 30 mm, par exemple égale à 15 mm.

La couche supérieure poreuse 18 est par exemple réalisée à base d'une mousse à cellules ouvertes.

Elle est par exemple réalisée en polyuréthanne. La mousse est injectée ou refendue. En variante, elle contient également de la matière recyclée, telle que définie plus haut, ou de la charge minérale ou encore du bio-polyol.

La masse volumique de cette mousse est par exemple comprise entre 10 kg/m³ et 80 kg/m³, avantageusement 70 kg/m³.

Cette mousse peut présenter une tortuosité élevée, notamment supérieure à 1,4 et avantageusement comprise entre 1,4 et 3, telle que décrite dans la demande WO 2007/006950 de la Demanderesse.

Cette tortuosité est mesurée par détermination de la pente de la courbe représentant la variation du carré de l'indice de réfraction pour la longueur d'onde acoustique utilisée, en fonction de l'inverse de la racine carrée de la fréquence.

Lorsqu'une mousse injectée est utilisée pour former la couche 18, un premier film fin 24A étanche à l'air, de masse surfacique inférieure à 150 g/m², avantageusement inférieure à 100 g/m², et d'épaisseur inférieure à 150 µm, avantageusement inférieure ou égale à 100 µm, est avantageusement interposé entre la couche de rigidification 16 et la couche supérieure poreuse élastique 18. Ce film évite la pénétration de la mousse dans la couche de rigidification 16 lors de son injection.

Lorsqu'une mousse injectée est utilisée pour former la couche ressort de base 14, un deuxième film fin 24B étanche à l'air, de masse surfacique inférieure à 150 g/m², avantageusement inférieure à 100 g/m², et d'épaisseur inférieure à 150 µm, avantageusement inférieure ou égale à 100 µm, est interposé entre la couche de rigidification 16 et la couche ressort de base 14. Ce film évite la pénétration de la mousse dans la couche de rigidification 16 lors de son injection.

Du fait de leur faible épaisseur, inférieure à 150 µm, les films fins 24A, 24B sont quasiment transparents acoustiquement.

En variante, la couche supérieure poreuse élastique 18 est formée par un feutre absorbant. Dans un exemple, le feutre comprend des microfibres, comme par exemple plus de 50%, avantageusement plus de 80% de microfibres.

Par « microfibres », on entend des fibres de tailles inférieures à 0,9 dtex, avantageusement inférieures à 0,7 dtex.

Dans le cas d'une couche 18 en feutre, la masse surfacique de la couche 18 est comprise avantageusement entre 200 g/m² et 2000 g/m².

La couche résistive supérieure 20 est par exemple réalisée à base d'un non-tissé ou d'un matériau ayant une résistance au passage de l'air contrôlée, par exemple un non-tissé résistif ou un feutre comprimé de faible grammage dont le comportement acoustique se rapproche de celui d'un non-tissé résistif. Elle présente une épaisseur inférieure celle de la couche supérieure poreuse 18 et à celle de la couche ressort de base 14.

Sa masse surfacique est comprise entre 20 g/m² et 200 g/m², avantageusement égale à 100 g/m².

Cette couche 20 présente une résistance au passage de l'air qui est comprise entre 200 N.m⁻³.s et 2000 N.m⁻³.s, avantageusement entre 200 N.m⁻³.s et 1200 N.m⁻³.s, notamment égale à 1000 N.m⁻³.s environ.

Comme on le verra plus bas, cette couche résistive supérieure 20 permet, en combinaison avec les autres couches 14, 16, 18, d'améliorer de manière surprenante le coefficient d'absorption et l'indice d'affaiblissement pour des fréquences supérieures à 1000 Hz environ.

La couche décorative additionnelle 22 de moquette ou de décor est disposée au-dessus de la couche résistive supérieure 20.

Dans une variante, la couche décorative 22 est disposée au dessus de la couche supérieure 18, en remplacement de la couche résistive 20.

Dans une autre variante, un film fin étanche 26 présentant une masse surfacique inférieure à 150 g/m², avantageusement inférieure à 100 g/m² et de préférence comprise entre 30 g/m² et 70 g/m² est interposé entre la couche supérieure 18 et la couche décorative 22, à la place de la couche résistive 20.

L'épaisseur de ce film 26 est inférieure à 150 µm, notamment inférieure à 100 µm. Ce film 26 est avantageusement réalisé en polymère thermoplastique.

La couche décorative additionnelle 22 est alors appliquée sur le film fin 26. Ce film 26 est destiné à assurer une étanchéité à l'eau dans le cas d'un tapis ou d'un plancher.

La couche de protection 56 est par exemple réalisée à base d'une moquette ou d'un feutre, par exemple d'une moquette du type aiguilleté plat ou d'un feutre bi-nappe, et peut avoir subi des traitements. Cette couche présente des caractéristiques particulières, par exemple des propriétés hydrophobes et/ou oléophobes et/ou d'hydro-repelance et/ou de tenue aux fluides et de résistance aux projections de gravillons etc.

Cette couche de protection 56 est disposée au-dessus de la couche résistive supérieure 20.

Dans une variante, la couche de protection 56 est disposée au dessus de la couche supérieure 18, en remplacement de la couche résistive 20.

Dans une autre variante, un film fin étanche 26 présentant une masse surfacique inférieure à 150 g/m², avantageusement inférieure à 100 g/m² et de préférence comprise entre 30 g/m² et 70g/m² est interposé entre la couche supérieure 18 et la couche de protection 56, à la place de la couche résistive 20.

L'épaisseur de ce film 26 est inférieure à 150 µm, notamment inférieure à 100 µm. Ce film 26 est avantageusement réalisé en polymère thermoplastique.

La couche de protection 56 est alors appliquée sur le film fin 26. Ce film 26 est destiné à assurer une étanchéité à l'eau, notamment dans le cas d'un passage de roue externe.

Des exemples de structures d'ensembles d'insonorisation selon l'invention, réalisés à base des couches 14 à 22, 24A, 24B et 56 telles que décrites plus haut, vont maintenant être décrits en regard des Figures 1 à 13.

Dans un premier ensemble d'insonorisation quadri-perméable 10A selon l'invention, représenté sur la Figure 1, la couche ressort de base 14 est avantageusement réalisée à base de feutre ou de mousse refendue, et est appliquée sur la surface 12.

La couche de rigidification 16 est avantageusement réalisée à base de feutre comprimé, et est appliquée sur la couche ressort de base 14, par exemple par collage.

La couche supérieure poreuse élastique 18 est avantageusement réalisée à base de feutre ou de mousse refendue et est appliquée sur la couche de rigidification 16, par exemple par collage.

L'ensemble 10A comprend en outre une couche résistive supérieure 20 telle que décrite plus haut, réalisée notamment à base de non-tissé, assemblée sur la couche supérieure poreuse élastique 18.

Dans un exemple particulier, léger et peu coûteux, la couche ressort de base 14 et la couche supérieure poreuse élastique 18 sont réalisées à base de feutre.

Le deuxième ensemble d'insonorisation 10B selon l'invention, représenté sur la Figure 2, diffère du premier ensemble 10A en ce qu'il est dépourvu de couche résistive supérieure 20 pour former un ensemble tri-perméable constitué des trois couches 14, 16, 18.

Dans le deuxième ensemble d'insonorisation 10B, la couche ressort de base 14 et la couche supérieure poreuse élastique 18 sont réalisées à base d'un feutre ou d'une mousse refendue.

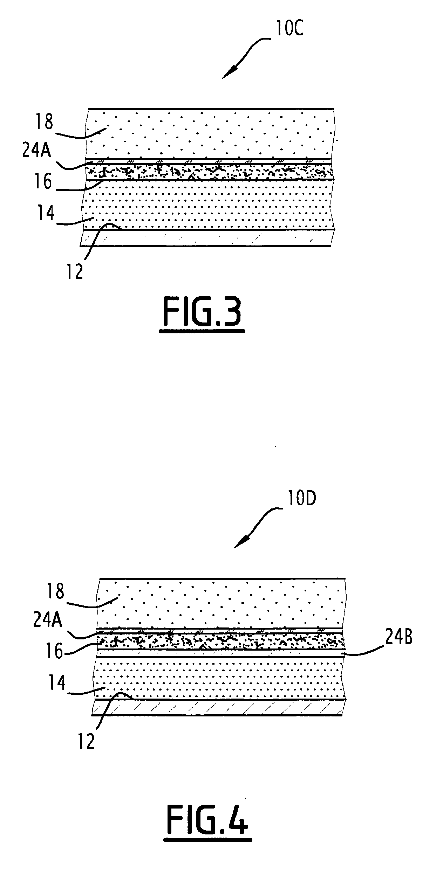

Le troisième ensemble d'insonorisation 10C selon l'invention, représenté sur la Figure 3, diffère du deuxième ensemble 10B en ce que la couche supérieure poreuse élastique 18 est formée d'une mousse injectée, avantageusement de tortuosité élevée, telle que définie plus haut.

Dans cet exemple, un premier film léger 24A tel que décrit plus haut est interposé entre la couche supérieure poreuse élastique 18 et la couche de rigidification 16.

Dans une variante de cet exemple, la couche supérieure poreuse élastique 18 est en feutre ou en mousse refendue comme dans le deuxième ensemble 10B, mais le film 24A reste interposé entre la couche supérieure poreuse élastique 18 et la couche de rigidification 16.

Un quatrième ensemble d'insonorisation 10D selon l'invention est représenté sur la Figure 4. Ce quatrième ensemble 10D diffère du troisième ensemble 10C en ce qu'un deuxième film léger 24B est interposé entre la couche ressort de base 14 et la couche de rigidification 16.

La couche ressort de base 14 est formée d'une mousse injectée telle que définie plus haut. En variante, la couche 14 est en feutre comme dans le deuxième ensemble 10B, mais le deuxième film 24B reste interposé entre la couche ressort de base 14 et la couche de rigidification 16.

Les ensembles 10A à 10D sont avantageusement disposés sur le tablier du véhicule, séparant l'habitacle du compartiment moteur, côté habitacle.

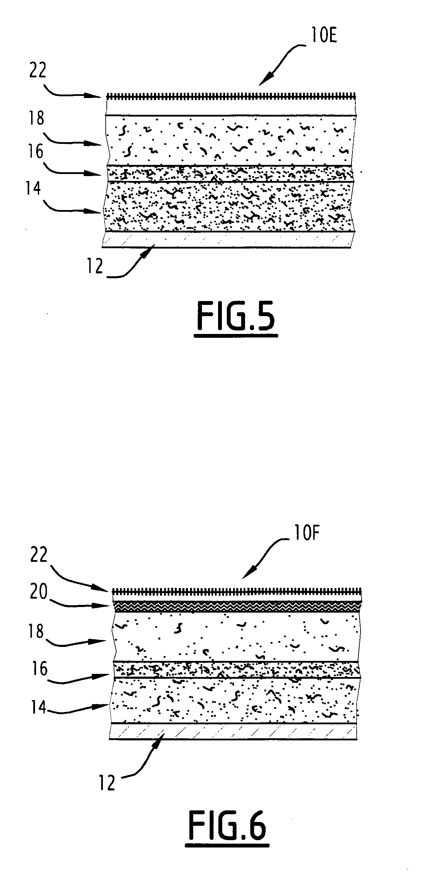

Un cinquième ensemble d'insonorisation 10E selon l'invention, représenté sur la Figure 5, diffère du premier ensemble 10A par la présence d'une couche additionnelle décorative 22, telle que décrite ci-dessus, qui remplace la couche résistive 20.

Le sixième ensemble d'insonorisation 10F selon l'invention diffère du premier ensemble 10A par la présence d'une couche additionnelle décorative 22, telle que décrite ci-dessus, qui est appliquée sur la couche résistive 20, à l'opposé de la couche supérieure poreuse élastique 18.

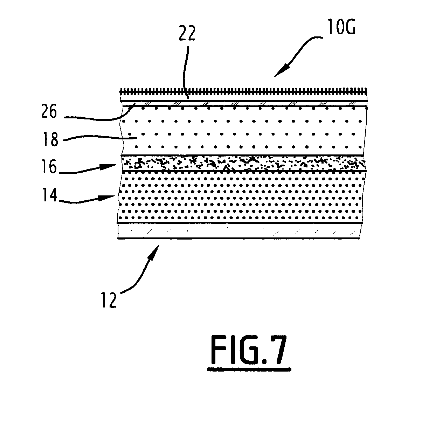

Le septième ensemble d'insonorisation 10G selon l'invention, représenté sur la Figure 7, diffère du cinquième ensemble 10E en ce qu'un film léger 26 de masse surfacique inférieure à 150 g/m² tel que décrit plus haut, est disposé entre la couche additionnelle de décor 22 et la couche supérieure poreuse élastique 18.

Le huitième ensemble d'insonorisation 10H selon l'invention diffère du troisième ensemble 10C en ce qu'il comprend, comme le septième ensemble 10G, une couche additionnelle de décor 22, et un film léger 26 de masse surfacique inférieure à 150 g/m² tel que décrit plus haut, disposé entre la couche additionnelle de décor 22 et la couche supérieure poreuse élastique 18.

En variante, une couche résistive 20 telle que décrite plus haut est interposée entre la couche additionnelle de décor 22 et la couche supérieure poreuse élastique 18, en remplacement du film 26. Dans une autre variante, la couche additionnelle de décor 22 est appliquée sur la couche supérieure poreuse élastique 18, sans qu'un film 26 ne soit interposé entre les couches 22 et 18.

Le neuvième ensemble d'insonorisation 10I selon l'invention diffère du quatrième ensemble 10D en ce qu'il comprend, comme le septième ensemble 10G, une couche additionnelle de décor 22, et un film léger 26 de masse surfacique inférieure à 150 g/m² tel que décrit plus haut, disposé entre la couche additionnelle de décor 22 et la couche supérieure poreuse élastique 18.

En variante, une couche résistive 20 telle que décrite plus haut est interposée entre la couche additionnelle de décor 22 et la couche supérieure poreuse élastique 18, en remplacement du film 26. Dans une autre variante, la couche additionnelle de décor 22 est appliquée sur la couche supérieure poreuse élastique 18, sans qu'un film 26 ne soit interposé entre les couches 22 et 18.

Les ensembles 10E à 10I sont avantageusement disposés sur le plancher du véhicule pour former un tapis.

Le dixième ensemble d'insonorisation 10J selon l'invention diffère du sixième ensemble 10F en ce que la couche ressort de base 14 est au moins partiellement disposée à l'écart de la surface 12 du véhicule automobile pour délimiter avec cette surface 12 une lame d'air 30 d'épaisseur supérieure à l'épaisseur moyenne de la couche de rigidification 16.

Dans cet exemple, la surface 12 est par exemple le fond d'une cavité ménagée dans le plancher en tôle d'un véhicule automobile. L'ensemble 10J est par exemple fixé sur le plancher du véhicule automobile au moins autour de la cavité.

Cette variante s'applique également aux ensembles 10A à 101 qui peuvent être disposés à l'écart de la surface 12.

Le onzième ensemble 10K selon l'invention diffère du septième ensemble 10G en ce que la couche ressort de base 14 est appliquée sur la surface 12 au fond du plancher et en ce que la couche ressort de base 14 est située à l'écart au moins localement de la couche de rigidification 16 pour délimiter la lame d'air 30 d'épaisseur moyenne supérieure à l'épaisseur moyenne de la couche de rigidification 16.

Cette variante s'applique également aux ensembles 10E, 10F, 10H 101 dans lesquels la couche ressort de base 14 peut être disposée à l'écart de la couche de rigidification 16 pour délimiter une lame d'air 30 d'épaisseur moyenne supérieure à l'épaisseur moyenne de la couche de rigidification 16.

Le douzième ensemble 10L selon l'invention est illustré par la Figure 12. Ce douzième ensemble 10L est destiné à être placé par exemple dans un passage 52 de roue avant 53 de véhicule automobile.

Ce passage de roue 52 comprend une tôle métallique supérieure 54 sensiblement en forme de demi-cylindre d'axe horizontal transversal, solidaire de la carrosserie du véhicule automobile, et une couche inférieure de protection 56, telle que définie plus haut. La couche de protection 56 est fixée sous la tôle 54 et définit avec cette tôle 54, un espace intermédiaire 58 de section verticale en forme de croissant.

La tôle 54 définit, en regard de la couche de protection 56, la surface 12 du véhicule automobile en regard de laquelle est placé l'ensemble d'insonorisation 10L.

Le douzième ensemble 10L peut être formé par l'un des ensembles 10E à 10I décrit plus haut, avec la substitution de la couche de décor 22 par la couche de protection 56, telle que décrite plus haut. Dans l'exemple représenté sur la Figure 12, l'ensemble 10L est formé par l'ensemble 10G décrit plus haut, dans lequel la couche de décor 22 a été remplacé par la couche de protection 56.

L'ensemble 10L est orienté de haut en bas avec la couche ressort de base 14 disposée en regard de la surface 12, partiellement à l'écart de cette surface 12 pour définir une lame d'air 30 dans l'espace intérieur 58, et de haut en bas sur la Figure 12, la couche de rigidification 16 appliquée sous la couche ressort de base 14, puis la couche poreuse élastique supérieure 18 et un film 26.

Le treizième ensemble 10M selon l'invention, illustré par la Figure 13 est par exemple disposé dans un passage 52 de roue arrière 53. Cet ensemble 10M remplit sensiblement totalement l'espace intérieur 58, de sorte que la couche ressort de base 14 est appliquée contre la surface 12 sur sensiblement toute sa surface. Il est pour le reste analogue au douzième ensemble 10L.

Les ensembles d'insonorisation tri-perméables ou quadri-perméables selon l'invention, qui ne comprennent pas de masse lourde étanche sont donc très légers, avec une masse surfacique globale pouvant être inférieure à 3 000 g/m², tout en maintenant à la fois une absorption excellente, avec un coefficient d'absorption pouvant atteindre 0,9 sur une très large gamme de fréquences et une isolation très satisfaisante, grâce à la résistance au passage de l'air très élevée de la couche de rigidification 16.

La présence additionnelle d'une couche résistive supérieure 20 augmente encore, de manière surprenante, l'absorption offerte par l'ensemble d'insonorisation quadri-perméable 10A dans la gamme comprise entre 500 Hz et 6000 Hz.

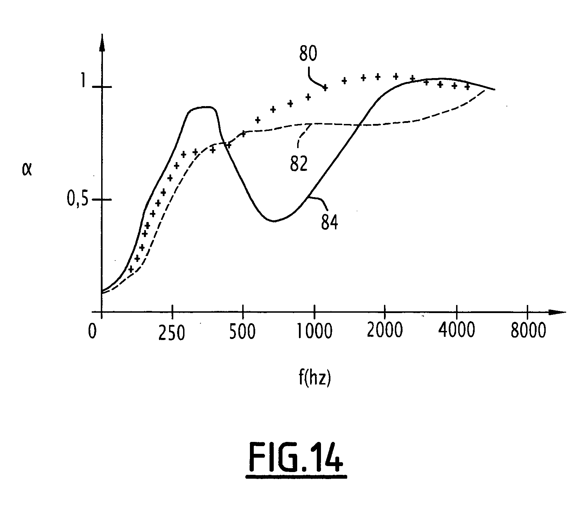

A titre d'illustration, des simulations du coefficient d'absorption α en fonction de la fréquence d'un ensemble quadri-perméable 10A selon l'invention, tel que représenté sur
la Figure 1 (courbe 80), d'un ensemble tri-perméable 10B selon l'invention, dépourvu de couche résistive supérieure 20 (courbe 82), et d'un ensemble quadri-couches de l'état de la technique présentant une masse lourde étanche (courbe 84), sont représentés sur la Figure 14.

Dans cet exemple, la couche ressort de base 14 de l'ensemble quadri-perméable 10A et de l'ensemble tri-perméable selon l'invention est réalisée à base d'un feutre de masse surfacique égale à 750 g/m² et d'épaisseur de 13 mm. La couche de rigidification 16 de ces ensembles est composée d'un feutre comprimé de masse surfacique égale à 1400 g/m² et d'épaisseur égale à 5 mm présentant une résistance au passage de l'air égale à 3500 N.m⁻³.s environ.

La couche supérieure poreuse élastique 18 est réalisée à base d'un feutre de masse surfacique égale à 400 g/m² et d'épaisseur égale à 7 mm. Dans le cas de l'ensemble quadri-perméable 10A, la couche résistive 20 est réalisée à base d'un non-tissé de résistance au passage de l'air égale à 1000 N.m⁻³.s environ.

L'ensemble d'isolation de l'état de la technique est réalisé à base d'une couche ressort de base en feutre, de masse surfacique égale à 950 g/m² et d'épaisseur égale à 16,5 mm, d'une couche de masse lourde étanche de masse surfacique égale à 1 kg/m², d'une couche supérieure poreuse élastique, d'épaisseur égale à 8 mm et de masse surfacique égale à 465 g/m².

Les courbes 80, 82 correspondant respectivement à l'ensemble quadri-perméable 10A et à l'ensemble tri-perméable selon l'invention 10B montrent une amélioration significative du coefficient d'absorption, notamment dans la gamme de fréquences comprise entre 500 Hz et 2000 Hz, par rapport à l'ensemble de l'état de la technique, illustré par la courbe 84.

En outre, l'ensemble quadri-perméable 10A (courbe 80) présente, notamment dans la gamme de fréquences comprise entre 500Hz et 5000Hz, une absorption supérieure à celle de l'ensemble tri-perméable 10B (courbe 82).

Comme on l'a vu dans les exemples mentionnés plus haut, la résistance au passage de l'air de la couche de rigidication 16 est avantageusement comprise entre 3500 N.m⁻³.s et 4500 N.m⁻³.s, notamment sensiblement égale à 4000 N.m⁻³.s.

La résistivité au passage de l'air de la couche supérieure poreuse élastique 18 est avantageusement comprise entre 20000 N.m⁻⁴.s et 60000 N.m⁻⁴.s.

La résistance au passage de l'air de la couche résistance supérieure 20, est avantageusement comprise entre 500 N.m⁻³.s et 1500 N.m⁻³.s, notamment comprise entre 900 N.m⁻³.s et 1000 N.m⁻³.s

## Revendications

1. Ensemble (10A à 10M) d'insonorisation pour véhicule automobile, du type comprenant :
- une couche ressort de base (14) réalisée à base d'un matériau poreux et élastique, la couche ressort de base (14) étant destinée à être placée en regard d'une surface (12) du véhicule automobile ;
- une couche de rigidification (16) disposée au-dessus de la couche ressort de base (14) et présentant une masse surfacique supérieure à 250 g/m² ;
- au moins une couche supérieure poreuse élastique (18) disposée sur la couche de rigidification (16) ;
**caractérisé en ce que** la couche de rigidification (16) est réalisée à base d'un matériau poreux dense présentant une résistance au passage de l'air qui est strictement supérieure à 2500 N.m⁻³.s et est inférieure à 6000 N.m⁻³.s, avantageusement comprise entre 3000 N.m⁻³.s et 5000 N.m⁻³.s.

2. Ensemble (10A à 10M) selon la revendication 1, **caractérisé en ce que** l'épaisseur de la couche de rigidification (16) est strictement inférieure à l'épaisseur de la couche supérieure poreuse élastique (18) et strictement inférieure à l'épaisseur de la couche ressort de base (14).

3. Ensemble (10A à 10M) selon l'une quelconque des revendications précédentes, **caractérisé en ce que** le matériau poreux de la couche de rigidification (16) comprend un feutre comprimé, ou une nappe de matière recyclée.

4. Ensemble (10A à 10M) selon l'une quelconque des revendications précédentes, **caractérisé en ce que** la résistivité au passage de l'air de la couche supérieure poreuse élastique (18) est avantageusement comprise entre 10000 N.m⁻⁴.s et 140000 N.m⁻⁴.s.

5. Ensemble (10A ; 10B; 10E ; 10F ; 10G ; 10J) selon l'une quelconque des revendications précédentes, **caractérisé en ce que** la couche de rigidification (16) est appliquée sur la couche ressort de base (14), sans interposition d'un film, la couche supérieure poreuse élastique (18) étant appliquée sur la couche de rigidification (16) sans interposition d'un film.

6. Ensemble (10C ; 10D ; 10H ; 10I) selon l'une quelconque des revendications 1 à 4, **caractérisé en ce qu'**il comprend au moins un film (24A, 24B) étanche à l'air, présentant une épaisseur inférieure ou égale à 150 µm, interposé entre la couche de rigidification (16) et l'une ou/et l'autre de la couche supérieure poreuse (18) et de la couche ressort de base (14).

7. Ensemble (10A; 10F ; 10J) selon l'une quelconque des revendications précédentes, **caractérisé en ce qu'**il comprend en outre une couche résistive supérieure (20), disposée au-dessus de la couche supérieure élastique poreuse (18), la couche résistive supérieure (20) présentant une résistance au passage de l'air comprise entre 200 N.m⁻³.s et 2000 N.m⁻³.s.

8. Ensemble (10A ; 10F ; 10J) selon la revendication 7, **caractérisé en ce que** la couche résistive supérieure (20) est réalisée à base d'un non-tissé ou d'un feutre comprimé présentant une masse surfacique inférieure à 200 g.m⁻².

9. Ensemble (10F ; 10J) selon l'une quelconque des revendications 7 à 8, **caractérisé en ce qu'**il comprend une couche décorative (22) ou une couche de protection (56) disposée sur la couche résistive supérieure (20), à l'opposé de la couche de rigidification (16).

10. Ensemble (10E) selon l'une quelconque des revendications 1 à 5, **caractérisé en ce qu'**il comprend une couche décorative (22) ou une couche de protection (56) appliquée sur la couche supérieure poreuse élastique (18), à l'opposé de la couche de rigidification (16).

11. Ensemble (10G ; 10H ; 10I ; 10K ; 10L ; 10M) selon l'une quelconque des revendications 1 à 5, **caractérisé en ce qu'**il comprend un film léger étanche (26), de masse surfacique inférieure ou égale à 150 g.m⁻² disposé au dessus de la couche supérieure poreuse élastique (18) et une couche décorative (22) ou une couche de protection (56) appliquée sur le film léger étanche (26), à l'opposé de la couche supérieure poreuse élastique (18).

12. Ensemble (10A; 10L ; 10M) selon l'une quelconque des revendications précédentes, **caractérisé en ce que** la couche ressort de base (14), et la couche supérieure poreuse élastique (18) sont réalisées à base de feutre.

13. Ensemble (10A à 10M) selon l'une quelconque des revendications 1 à 10, caractérisé en ce la couche supérieure poreuse élastique (18) est réalisée à base d'une mousse de tortuosité supérieure à 1,4.

14. Ensemble (10K) selon l'une quelconque des revendications précédentes, **caractérisé en ce que** dans au moins une partie de l'ensemble de d'insonorisation (10K), la couche ressort de base (14) est espacée de la couche de rigidification (16) pour délimiter une lame d'air (30) d'épaisseur moyenne supérieure à l'épaisseur de la couche de rigidification (16).

15. Elément de paroi de véhicule automobile, notamment plancher, tablier ou passage de roue de véhicule automobile, **caractérisé en ce qu'**il comprend :
- un support formant un élément de caisse du véhicule délimitant une surface (12) ;
- un ensemble (10J ; 10L) selon l'une quelconque des revendications précédentes, au moins une partie de la couche ressort de base (14) de l'ensemble (10L) étant disposée à l'écart du support (12) pour délimiter entre le support (12) et la couche ressort de base (14) une lame d'air (30) d'épaisseur moyenne supérieure à l'épaisseur de la couche de rigidification (16).

## Patentansprüche

1. Einheit (10A bis 10M) zur Schalldämmung für ein Kraftfahrzeug, der Bauart, die Folgendes umfasst:
- eine Dämpfungsbasisschicht (14), die auf Grundlage eines porösen und elastischen Materials hergestellt ist, wobei die Dämpfungsbasisschicht (14) dazu bestimmt ist, einer Fläche (12) des Kraftfahrzeugs zugewandt angeordnet zu sein;
- eine Versteifungsschicht (16), die über der Dämpfungsbasisschicht (14) vorgesehen ist und eine flächenbezogene Masse von über 250 g/m² aufweist;
- mindestens eine elastische, poröse, obere Schicht (18), die auf der Versteifungsschicht (16) vorgesehen ist;
**dadurch gekennzeichnet, dass** die Versteifungsschicht (16) auf Grundlage eines dichten, porösen Materials hergestellt ist, das einen Luftdurchlasswiderstand aufweist, der absolut größer als 2500 N.m⁻³.s und kleiner als 6000 N.m⁻³ ist, vorteilhafter Weise zwischen 3000 N.m⁻³.s und 5000 N.m⁻³.s beträgt.

2. Einheit (10A bis 10M) nach Anspruch 1, **dadurch gekennzeichnet, dass** die Dicke der Versteifungsschicht (16) absolut kleiner ist als die Dicke der elastischen, porösen, oberen Schicht (18) und absolut kleiner als die Dicke der Dämpfungsbasisschicht (14).

3. Einheit (10A bis 10M) nach einem der vorhergehenden Ansprüche, **dadurch gekennzeichnet, dass** das poröse Material der Versteifungsschicht (16) einen Pressfilz oder eine Matte aus Recyclingmaterial umfasst.

4. Einheit (10A bis 10M) nach einem der vorhergehenden Ansprüche, **dadurch gekennzeichnet, dass** der spezifische Luftdurchlasswiderstand der elastischen, porösen, oberen Schicht (18) vorteilhafter Weise zwischen 10000 N.m⁻⁴.s und 140000 N.m⁻⁴.s beträgt.

5. Einheit (10A; 10B; 10E, 10F; 10G; 10J) nach einem der vorhergehenden Ansprüche, **dadurch gekennzeichnet, dass** die Versteifungsschicht (16) auf der Dämpfungsbasisschicht (14) angebracht ist, ohne dass eine Folie dazwischen eingesetzt ist, wobei die elastische, poröse, obere Schicht (18) auf der Versteifungsschicht (16) angebracht ist, ohne dass eine Folie dazwischen eingesetzt ist.

6. Einheit (10C; 10D; 10H, 10I) nach einem der Ansprüche 1 bis 4, **dadurch gekennzeichnet, dass** sie mindestens eine luftdichte Folie (24A, 24B) umfasst, die eine Dicke von unter oder gleich 150 µm aufweist, die zwischen der Versteifungsschicht (16) und der porösen, oberen Schicht (18) und/oder der Dämpfungsbasisschicht (14) eingesetzt ist.

7. Einheit (10A; 10F; 10J) nach einem der vorhergehenden Ansprüche, **dadurch gekennzeichnet, dass** sie darüber hinaus eine obere, widerstandsfähige Schicht (20) umfasst, die über der porösen, elastischen, oberen Schicht (18) vorgesehen ist, wobei die widerstandsfähige Schicht (20) einen Luftdurchlasswiderstand aufweist, der zwischen 200 N.m⁻³.s und 2000 N.m⁻³.s beträgt.

8. Einheit (10A; 10F; 10J) nach Anspruch 7, **dadurch gekennzeichnet, dass** die obere, widerstandsfähige Schicht (20) auf Grundlage eines Vlieses oder eines Pressfilzes hergestellt ist, das/der eine flächenbezogene Masse von unter 200 g.m⁻² aufweist.

9. Einheit (10F; 10J) nach einem der Ansprüche 7 bis 8, **dadurch gekennzeichnet, dass** sie eine Dekorschicht (22) oder eine Schutzschicht (56) umfasst, die auf der oberen, widerstandsfähigen Schicht (20), der Versteifungsschicht (16) entgegengesetzt vorgesehen ist.

10. Einheit (10E) nach einem der Ansprüche 1 bis 5, **dadurch gekennzeichnet, dass** sie eine Dekorschicht (22) oder eine Schutzschicht (56) umfasst, die auf der elastischen, porösen, oberen Schicht (18), der Versteifungsschicht (16) entgegengesetzt angebracht ist.

11. Einheit (10G; 10H; 10I; 10K; 10L; 10M) nach einem der Ansprüche 1 bis 5, **dadurch gekennzeichnet, dass** sie eine dichte dünne Folie (26) mit einer flächenbezogenen Masse von unter oder gleich 150 g.m⁻², die über der elastischen, porösen, oberen Schicht (18) vorgesehen ist, und eine Dekorschicht (22) oder eine Schutzschicht (56) umfasst, die auf der dichten dünnen Folie (26), der elastischen, porösen, oberen Schicht (18) entgegengesetzt angebracht ist.

12. Einheit (10A; 10L; 10M) nach einem der vorhergehenden Ansprüche, **dadurch gekennzeichnet, dass** die Dämpfungsgrundschicht (14) und die elastische, poröse, obere Schicht (18) auf Grundlage von Filz hergestellt sind.

13. Einheit (10A bis 10M) nach einem der Ansprüche 1 bis 10, **dadurch gekennzeichnet, dass** die elastische, poröse, obere Schicht (18) auf Grundlage eines Schaums mit einer Verwindung von über 1,4 hergestellt ist.

14. Einheit (10K) nach einem der vorhergehenden Ansprüche, **dadurch gekennzeichnet, dass** in zumindest einem Teil der Schalldämpfungseinheit (10K) die Dämpfungsbasisschicht (14) von der Versteifungsschicht (16) beabstandet ist, um einen Luftzwischenraum (30) mit einer Dicke, die größer ist als die Dicke der Versteifungsschicht (16), einzugrenzen.

15. Kraftfahrzeugwandelement, insbesondere Kraftfahrzeugboden, -stirnwand oder
- radkasten, **dadurch gekennzeichnet, dass** es umfasst:
- einen Träger, der ein eine Fläche (12) eingrenzendes Karosserieelement des Kraftfahrzeugs bildet;
- eine Einheit (10J; 10L) nach einem der vorhergehenden Ansprüche;
wobei zumindest ein Teil der Dämpfungsbasisschicht (14) der Einheit (10L) in einem Abstand vom Träger (12) vorgesehen ist, um zwischen dem Träger (12) und der Dämpfungsbasisschicht (14) einen Luftzwischenraum (30) mit einer mittleren Dicke vorzusehen, die größer ist als die Dicke der Versteifungsschicht (16).

## Claims

1. A soundproofing assembly (10A à 10M) for an automobile, of the type comprising:
- a base spring layer (14) made of a porous, resilient material, the base spring layer (14) being intended to be placed opposite a surface (12) of an automobile;
- a stiffening layer (16) arranged above the base spring layer (14) with a surface density of more than 250 g/m²;
- at least one porous, resilient upper layer (18) arranged on the stiffening layer (16);
**characterized in that** the stiffening layer (16) is made from a dense porous material having a air flow resistance which is strictly higher than 2500 N.m⁻³.s and which is lower than 6000 N.m⁻³.s, advantageously comprised between 3000 N.m⁻³.s and 5000 N.m⁻³.s.

2. The assembly (10A to 10M) according to claim 1, **characterized in that** the thickness of the stiffening layer (16) is strictly smaller than the thickness of the resilient porous upper layer (18) and strictly smaller than the thickness of the base spring layer (14).

3. The assembly (10A to 10M) according to any one of the preceding claims, **characterized in that** the porous material of the stiffening layer (16) comprises a compressed felt, or a batt of recycled material.

4. The assembly (10A to 10M) according to any one of the preceding claims, **characterized in that** the resistivity to the passage of air of the resilient porous upper layer (18) is advantageously between 10000 N.m⁻⁴.s and 140000 N.m⁻⁴.s.

5. The assembly (10A; 10B; 10E; 10F; 10G; 10J) according to any one of the preceding claims, **characterized in that** the stiffening layer (16) is applied on the base spring layer (14), without insertion of a film, the resilient porous upper layer (18) being applied on the stiffening layer (16) without insertion of a film.

6. The assembly (10C; 10D; 10H; 10I) according to any one of claims 1 to 4, **characterized in that** it comprises at least one airtight film (24A, 24B), having a thickness smaller than or equal to 150 µm, inserted between the stiffening layer (16) and one and/or the other of the porous upper layer (18) and the base spring layer (14).

7. The assembly (10A; 10F; 10J) according to any one of the preceding claims, **characterized in that** it also comprises a resistive upper layer (20), arranged above the porous resilient upper layer (18), the upper resistive layer (20) having a resistance to air flow between 200 N.m⁻³.s and 2000 N.m⁻³.s.

8. The assembly (10A; 10F; 10J) according to claim 7, **characterized in that** the upper resistive layer (20) is made from a nonwoven or a compressed felt having a basis weight of less than 200 g.m⁻².

9. The assembly (10F; 10J) according to any one of claims 7 to 8, **characterized in that** it comprises a decorative layer (22) or a protective layer (56) arranged on the upper resistive layer (20), opposite the stiffening layer (16).

10. The assembly (10E) according to any one of claims 1 to 5, **characterized in that** it comprises a decorative layer (22) or a protective layer (56) applied on the resilient porous upper layer (18), opposite the stiffening layer (16).

11. The assembly (10G ; 10H ; 10I ; 10K ; 10L ; 10M) according to any one of claims 1 to 5, **characterized in that** it comprises a light sealing film (26), with a basis weight of less than or equal to 150 g.m⁻² arranged above the resilient porous upper layer (18) and a decorative layer (22) or protective layer (56) applied on the light sealing film (26), opposite the resilient porous upper layer (18).

12. The assembly (10A; 10L ; 10M) according to any one of the preceding claims, **characterized in that** the base spring layer (14), and the resilient porous upper layer (18) are made with a felt base.

13. The assembly (10A to 10M) according to any one of claims 1 to 10, **characterized in that** the resilient porous upper layer (18) is made with a foam base with a tortuosity greater than 1.4.

14. The assembly (10K) according to any one of the preceding claims, **characterized in that** in at least one part of the soundproofing assembly (10K), the base spring layer (14) is spaced apart from the stiffening layer (16) to delimit an air blade (30) with an average thickness greater than the average thickness of the stiffening layer (16).

15. An automobile wall element, in particular an automobile floor, fire wall or wheel passage, **characterized in that** it comprises:
- a support forming a body element of the automobile delimiting a surface (12); and
- an assembly (10J; 10L) according to any one of the preceding claims, at least part of the base spring layer (14) of the assembly (10L) being arranged spaced away from the support (12) to delimit, between the support (12) and the base spring layer (14), an air blade (30) with an average thickness greater than the average thickness of the stiffening layer (16).
